# EUROPEAN PATENT SPECIFICATION

(11) **EP 2 872 323 B1**
(45) Date of publication and mention of the grant of the patent: **07.03.2018**
(21) Application number: 13816623.6
(22) Date of filing: 10.07.2013
(51) Int. Cl.: B32B 7/00, B32B 37/12, B32B 41/00, B32B 7/12

(54) **TEMPORARILY POSITIONABLE MELTABLE ADHESIVES FOR SHOE AND APPAREL ASSEMBLY**
VORÜBERGEHEND POSITIONIERBARE SCHMELZKLEBER FÜR SCHUH- UND BEKLEIDUNGSANORDNUNG
ADHÉSIFS FUSIBLES TEMPORAIREMENT POSITIONNABLES POUR CHAUSSURE ET ENSEMBLE DE CONFECTION

(30) Priority: 10.07.2012 US 201213545681
(43) Date of publication of application: 20.05.2015
(73) Proprietor: NIKE Innovate C.V., Beaverton, OR 97005-6453 (US)
(72) Inventor: DAVIS, Carrie L., Beaverton, OR 97005-6453 (US); KRSTIC, Ruzica, Beaverton, OR 97005-6453 (US); LYTTLE, Amy, Beaverton, OR 97005-6453 (US)
(74) Representative: Beattie, Alex Thomas Stewart
(86) International application number: PCT/US2013/049909
(87) International publication number: WO 2014/011761

(56) References cited:
- WO-A1-96/15897
- US-A- 5 487 929
- US-A- 5 589 246
- US-A- 5 807 461
- US-A1- 2004 089 396
- US-A1- 2007 012 775
- US-A1- 2013 299 062
- US-B1- 6 565 697

## Description

### FIELD OF THE INVENTION

The present invention relates to materials, systems, and/or methods for adhering layers in the assembly of shoes, apparel, equipment, or other items. More particularly, the present invention relates to hot-melt adhesive films with at least one side entirely or partially coated with adhesives that permit the film to be temporarily and moveably adhered to a surface to be bonded using the film.

WO96/15897 discloses a quick mounting fastening assembly including a fastening structure having an initial attachment surface, and a main attachment surface that is approximately coplanar with the initial attachment surface. A layer of pressure sensitive adhesive over the initial attachment surface affords adhering the fastening structure to a substrate by pressing the layer of pressure sensitive adhesive against the substrate. A layer of hot-melt adhesive covering the main attachment surface can then be heated by friction in one of several ways to melt the layer of hot-melt adhesive so that upon cooling the layer of hot-melt adhesive will be adhered to the surface of the substrate.

### SUMMARY OF THE INVENTION

The assembly of shoes, apparel, and various types of accessories or equipment made of pliable materials often involves using adhesive films. Often, these adhesive films are at least partially melted during the assembly process to enable them to flow into the layers of material, such as textiles, above and/or below the adhesive film. For example, a film may be of a type sometimes referred to as a "hot-melt" that will partially melt when heated, although films known as "cold melts" are also known, and some films may be activated with pressure and/or ultrasonic energy in addition to or instead of heat. A typical process of assembly may comprise stacking a base layer material, followed by an adhesive layer, followed by a top layer to be adhered to the base layer; after stacking a heat press or other device may be used to activate the adhesive layer to bond the base layer and the top layer together. While this process is straightforward in the case of a simple design, when an item being manufactured is complicated the proper alignment of numerous elements in stacking may be exceptionally challenging. Meanwhile, because the adhesive layer, once activated, cannot be deactivated, an incorrectly stacked item must ultimately be discarded, resulting in undesirable waste.

The present invention provides materials, systems, and methods that facilitate the assembly of shoes, apparel, equipment, accessories, or any other item using sheet adhesives. A tack layer may be added to one or both sides of the adhesive layer. The tack layer may be adhesive, glue or other material that is active at temperatures different than the adhesive layer. For example, the adhesive layer may be activated to flow and form a bond at a first temperature, while the tack layer may be active to form a bond at a second temperature, the second temperature being lower than the first temperature. For example, the tack layer may be activated at room temperature, enabling it to at least lightly adhere to compatible surfaces with not additional application of heat, pressure, ultrasonic energy, etc., while the adhesive layer may be activated only by the application of additional energy. Accordingly, the tack layer may be used to temporarily position the adhesive layer before the adhesive layer is activated. The strength of the bond formed by the tack layer may be considerably less strong than the bond formed by the adhesive layer, such that the bond formed by the tack layer may be readily severed if, for example, parts being temporarily assembled are discovered to be improperly aligned prior to the activation of the adhesive layer.

A tack layer may be provided on all or part of a surface of an adhesive layer. For example, a tack layer may only partially cover a side of the adhesive layer so as to not physically or chemically interfere with the flow of the adhesive layer when the adhesive layer is activated. The tack layer may be applied in a pattern of dots, stripes, a checkerboard, etc. in order to function as a temporary adhesive while still permitting the adhesive layer to flow when activated. If desired, opposing surfaces of the adhesive layer may have different types of tack layers, for example to provide different strengths of temporary bonds or to engage different types of materials, and/or opposing surfaces of the adhesive layer may have a tack layer provided in a different pattern.

The present invention also provides methods of assembling an item using an adhesive layer with at least one tack layer on at least a first surface of the adhesive layer. Such a method may comprise forming or selecting the desired pieces for assembly, temporarily assembling the pieces using the tack layer(s) to temporarily secure the pieces together, inspecting the assembly, and then activating the adhesive layer if the assembly is acceptable.

This section provides a general summary of the disclosure, and is not a comprehensive disclosure of its full scope or all of its features. Further areas of applicability will become apparent from the description provided herein. The description and specific examples in this summary are intended for purposes of illustration only and are not intended to limit the scope of the present disclosure.

### BRIEF DESCRIPTION OF THE DRAWING

The drawings described herein are for illustrative purposes only of selected embodiments and not all possible implementations, and are not intended to limit the scope of the present disclosure.
FIG. 1 illustrates the assembly of layers of materials in accordance with an example of the present invention;
FIG. 2 illustrates an example of layers of materials in accordance with the present invention temporarily assembled for inspection;
FIG. 3 illustrates a further example of layers of materials in accordance with the present invention temporarily assembled for inspection;
FIG. 4 illustrates an example of a tack layer pattern in accordance with the present invention;
FIG. 5 illustrates a further example of a tack layer pattern in accordance with the present invention;
FIG. 6 illustrates a further example of a tack layer pattern in accordance with the present invention;
FIG. 7 illustrates a further example of a tack layer pattern in accordance with the present invention;
FIG. 8 illustrates a method of assembling layers of an item in accordance with the present invention; and
FIG. 9 illustrates a further method of assembling layers of an item in accordance with the present invention.

Corresponding reference numerals indicate corresponding parts throughout the several views of the drawings.

### DETAILED DESCRIPTION OF THE INVENTION

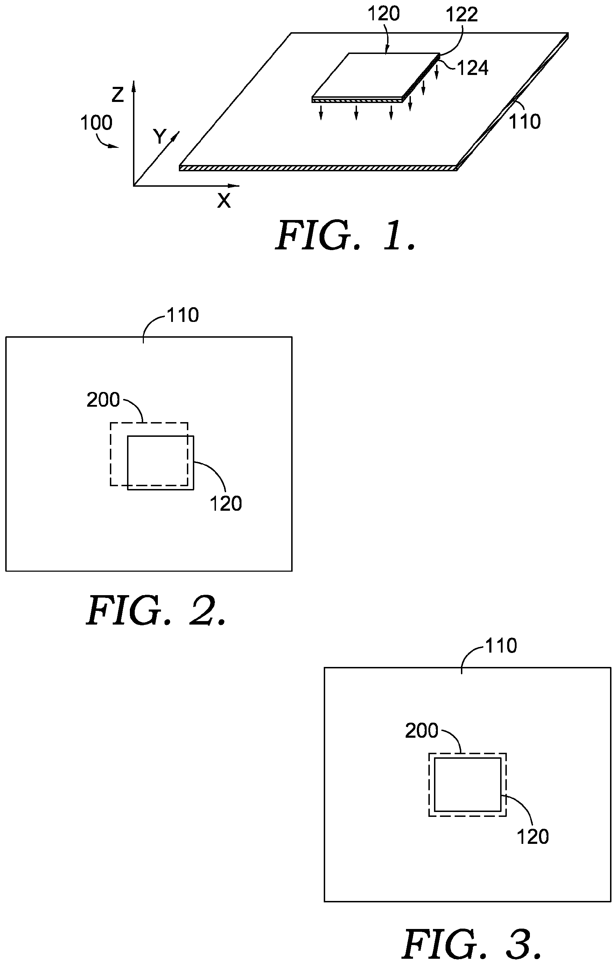

Referring now to FIG. 1, a base layer 110 may be positioned in a three-dimensional space defined, for example, using an x, y, z coordinate system 100. A second layer 120 may be positioned upon base layer 110 as part of the assembly process of a completed item. Second layer may have an adhesive layer 122 that may be activated by the application of energy, such as heat, pressure, ultrasonic energy, etc. A tack layer 124 may be provided on adhesive layer 122 facing base layer 110 in the orientation desired for assembly. As indicated by arrows, second layer 120 may be positioned by stacking it on to base layer 110.

Referring now to FIG. 2, the partially assembled item of FIG. 1 is shown in during an inspection to determine whether second layer 120 has been properly stacked on to base layer 110. For example, inspection standards may define zone 200 within which second later 120 must be positioned. While zone 200 is indicated using a dashed line, zone 200 and similar zones used for inspections in accordance with the present invention need not be temporarily or permanently marked on any layer or item in the assembly process. A zone such as zone 200 may be indicated using projection techniques or provided for electronically or in software as part of an automated inspection system. Further, a zone such as zone 200 may be defined relative to other aspects of an item, such as an edge of base layer 110, or may even be provided using a template or overlay utilized to facilitate inspection of partially assembled items.

Regardless as to how zone 200 is defined, as illustrated in FIG. 2 second layer 120 may not be appropriately positioned. In the present example, which is provided for illustrative purposes only, second layer 120 extends out of zone 200 along two sides. Accordingly, second layer 120 may be removed from base layer 110 by severing the connection formed by tack layer 124. Second layer 120 may then be repositioned, such as illustrated in the example of FIG. 3. As illustrated in FIG. 3, second layer 120 is now wholly positioned within zone 200. Accordingly, the partially assembled item illustrated in FIG. 3 may be permanently assembled by activating adhesive layer 122.

A variety of materials may be used as a base layer and/or a second layer. For example, woven textiles, knit textiles, foams, natural leather, synthetic leather, films, nonwoven reinforcing materials, meshes, and the like may be used in accordance with the present invention. Woven and/or knit textiles may comprise any type of natural or synthetic fibers, such as polyester, nylon, cotton, etc. Foams may be PU, EVAs, phylons, or of any other type. Films may comprise PU films, TPU films, or any other type of film material. While systems and methods in accordance with the invention may be used to bond two similar or different layers of pliable sheet type materials, non-pliable or non-sheet type materials may be bonded together in a layered arrangement in accordance with the present invention.

Further, a variety of materials may be used for an adhesive layer. The material used for an adhesive layer in accordance with the present invention may be selected based, at least in part, upon the types of materials to be permanently bonded together, i.e., the base and second materials as described in the examples herein, and based, at least in part, upon the strength of bond ultimately desired between the base material and the second material. Examples of acceptable materials are often referred to as "hot melt" or "PSA" or "PSA/hot melt" adhesives, although other types of activatable adhesive materials may be used as well. Different adhesive materials may require processing at different temperatures and/or pressures, for example at 110 degrees centigrade, 115 degrees centigrade, 118 degrees centigrade, 120 degrees centigrade, 122 degrees centigrade, 125 degrees centigrade, 130 degrees centigrade, etc, potentially with the temperature controlled to varying degrees, such as to within 2 degrees. Processing times may vary based upon the type of material used for the adhesive layer, the materials used for the base layer and the second layer, the thicknesses of the various materials used, the process temperature and/or pressure, the strength of bond ultimately desired, etc. Process times may be, for example, 30 seconds, 45 seconds, etc. Pressure applied may be, for example, approximately 5.5 kilograms per square centimeter, but more or less pressure may be used. An adhesive layer may have any thickness, such as between 0.1 and 0.5 millimeters, such as 0.2 or 0.3 millimeters.

Similarly, the amount of temporary bonding strength provided by the tack layer may be varied both by the selection of the material(s) used to form the tack layer and the arrangement of that material upon the adhesive layer. A material for the tack layer may be selected to provide the desired flexibility throughout the expected life of the item and to not create marking on a base layer or second layer of an item when a layer is repositioned if such marking is not acceptable in a finished item. A tack layer may comprise a pressure sensitive adhesive ("PSA") a glue or other adhesive that is active under conditions that do not activate the adhesive layer. Depending upon the types and configurations of materials to be temporarily bonded using a tack layer, different bonding strengths may be desired. Further, different patterns may be desired for the tack layer to permit different bonding behaviors by the adhesive layer upon ultimate activation. If an adhesive layer is provided separate from the base layer and the second layer, the adhesive layer may have two tack surfaces, one to engage the base layer and one to engage the second layer; in such an example, different materials and different patterns may be used for the different tack layers. A few examples of the potentially infinite arrangements of a tack layer are illustrated and described herein.

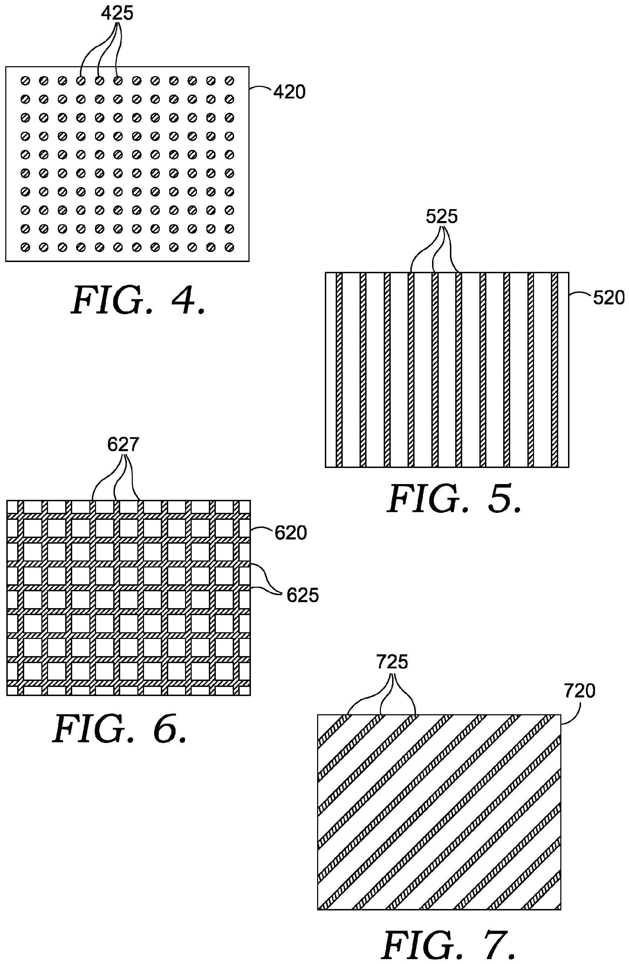

Referring now to FIGS. 4-7, various examples of possible arrangements of a tack layer over in adhesive layer are illustrated. In the examples illustrated in FIGS. 4-7, a tack layer is provided that maintains gaps or openings to permit the adhesive layer to engage other layers of materials during the assembly process without physical or chemical interference from the tack layer.

For example, FIG. 4 illustrates a tack layer comprising a plurality of dots 425 arrayed over adhesive layer 420. In the example illustrated in FIG. 5, a tack layer is provided in a plurality of stripes 525 arranged extending vertically over adhesive layer 520. In yet a further example illustrated in FIG. 6, a tack layer comprising a first plurality of horizontal stripes 625 and a second plurality of intersecting vertical strikes 627 or provided over adhesive layer 620. In yet a further example of FIG. 7, a tack layer comprises a plurality of diagonal stripes 725 over adhesive layer 720. As can be appreciated from these examples, a tack layer may be provided over and adhesive layer in any of an endless variety of possible configurations. The precise ratio of tack layer relative to exposed adhesive layer may vary depending upon the materials used for the tack layer, the adhesive layer, and other layers to be bound using the adhesive layer. Further, different ratios of tack layer to exposed adhesive layer may be desired for different types of items that are expected to be exposed to different types of force, thereby requiring different strengths of permanent bonds. For example, ornamentation may not ultimately be subjected to show wrong forces during use, thereby requiring little or no exposed adhesive layer to attain sufficient bonding from the adhesive layer to permit the final item to function properly, while a functional component of and athletic shoe may be subjected to considerable forces during the expected use of the shoe, thereby requiring a judicious selection of materials and ratios of tack layer to exposed adhesive layer in order for the finished shoe to meet appropriate desired bonding strengths.

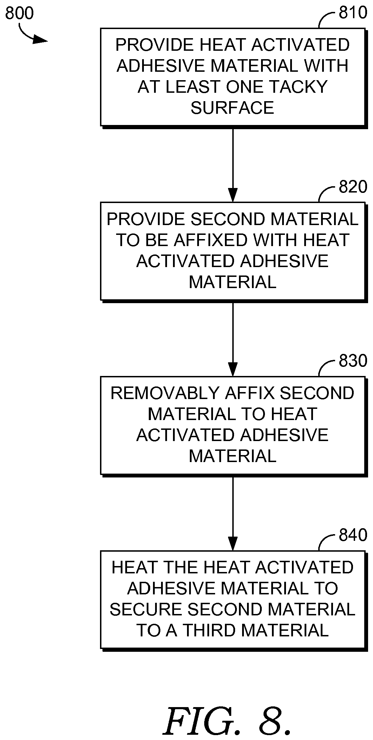

Referring now to FIG. 8, a method 800 for assembling layers oven item is illustrated. Method 800 may commence with step 810 of providing a heat activated adhesive material with at least one tacky surface. The tacky surface of the heat activated adhesive material provided in step 810 may comprise any of the arrangements illustrated in FIGS. 4-7, or any other desired arrangement. Step 820 may comprise providing a second material, such as a base material, to be affixed with the heat activated adhesive material. In step 830 the second layer and the heat activated adhesive material may be removably or temporarily affixed using the tacky layer. In step 840 heat activated adhesive material may be activated through the application of heat to fix it to the second material.

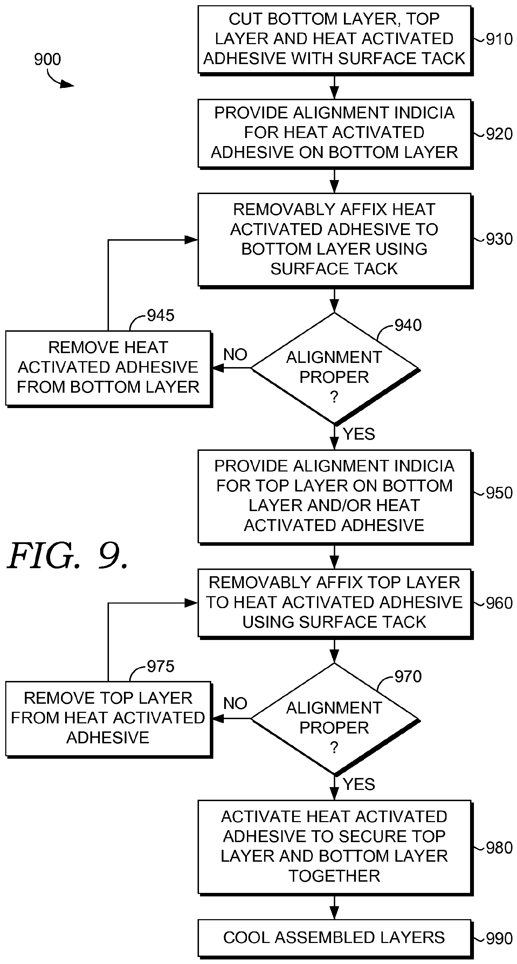

Referring now to FIG. 9, a further example of a method 900 in accordance with the present invention for assembling layers of an item is illustrated. In step 910 a bottom layer, top layer and heat activated adhesive layer having at least one tacky surface may be cut as desired. In step 920 alignment indicia for the heat activated layer may be provided on the bottom layer. Step 920 may be performed by marking bottom layer, by projecting an indicia on bottom layer, using a template, or by any other means. In step 930 the heat activated adhesive layer may be removably affixed to the bottom layer using the tacky surface. In step 940 the alignment of the adhesive layer may be checked. If the inspection of step 940 is successful, method 900 may proceed to step 950. If the result of inspection step 940 is that adhesive layer is improperly aligned on bottom layer, method 900 may proceed to step 945 of removing heat activated adhesive layer from bottom layer and returning to step 930. Once method 900 reaches step 950, step 950 may comprise providing alignment indicia for the top layer on the bottom layer and/or the heat activated adhesive layer. As explained with regard to step 920, the alignment indicia provided in step 950 may be created in any way. In step 960 the top layer may be removably affixed to the heat activated adhesive layer using a tacky surface. In step 970 the alignment of the top layer may be inspected. If the alignment is unacceptable, method 900 may proceed to step 975 to remove the top layer from the heat activated adhesive, and then return to step 960. If inspection step 970 concludes that the top layer is properly aligned on adhesive layer, method 900 may proceed to step 980 of activating the adhesive layer to secure the top layer and bottom layer together. Finally, method 900 may conclude with step 990 of cooling the assembled layers.

Systems and methods of assembling layers of items in accordance with the present invention may depart from the examples illustrated and described herein. For example, various arrangements, configurations, shapes, and materials may be used. Further, steps of the methods in accordance with the present invention may be performed in orders departing from those illustrated herein.

The foregoing description of the embodiments has been provided for purposes of illustration and description. It is not intended to be exhaustive or to limit the invention. Individual elements or features of a particular embodiment are generally not limited to that particular embodiment, but, where applicable, are interchangeable and can be used in a selected embodiment, even if not specifically shown or described. Such variations are not to be regarded as a departure from the invention, and all such modifications are intended to be included within the scope of the invention.

## Claims

1. A method (800, 900) for assembling layers of an item, the method comprising:
providing a base layer (110) of a pliable sheet type material (820);
providing a second layer (120) of a pliable sheet type material to attach to the base layer (110);
providing an activatable adhesive layer (122, 420, 520, 620, 720), the adhesive layer (122, 420, 520, 620, 720) having a tack layer 124 on at least one face (810);
stacking the adhesive layer onto the base layer (110);
stacking the second layer onto the adhesive layer (122, 420, 520, 620, 720);
using the at least one tack layer (124) to form a bond temporarily retaining the stacked configuration of the base layer (124), the adhesive layer (122, 420, 520, 620, 720), and the second layer (830, 930, 960);
inspecting the stacked base layer, adhesive layer, and second layer to determine whether they meet predefined quality control standards (940, 970); if the stacked base layer, adhesive layer, and second layer do not meet the predefined quality control standards, severing the bond formed by the tack layer temporarily retaining the stacked configuration (945, 975) and adjusting the positioning of at least one of the adhesive layer and the second layer and then repeating the inspecting of the stacked base layer, adhesive layer, and second layer (940,970); and
if the stacked base layer, adhesive layer, and second layer meet the predefined quality control standards, activating the adhesive layer to permanently bond the base layer to the second layer (840, 980).

2. The method (800, 900) of claim 1, wherein the step of providing an activatable adhesive layer, the adhesive layer having a tack layer on at least one face (810), further comprises providing a heat activatable adhesive layer (122, 420, 520, 620, 720).

3. The method of claim 1, wherein the step of providing an activatable adhesive layer, the adhesive layer having a tack layer on at least one face, further comprises providing a heat activatable adhesive layer have a tack layer on both faces.

4. The method of claim 3, wherein at least one of the tack layers comprises an adhesive arranged in a pattern that covers only a portion of the face while allowing other portions of the face to contact one of the base material and the second material.

5. The method (800, 900) of claim 3, wherein both of the tack layers (124) comprise adhesives arranged as a pattern that cover only portions of the face while allowing other portions of the face to contact the base material 110 and the second material (120), respectively.

6. The method (800, 900) of claim 5, wherein the tack layers (124) comprise different adhesive types.

7. The method (800, 900) of claim 5, wherein the tack layers (124) comprise the same adhesive type or wherein the tack layers (124) comprise adhesives arranged in the same pattern.

8. The method (800, 900) of claim 1, wherein
the second layer (120) of sheet type material comprises: the activatable adhesive layer (122, 420, 520, 620, 720) affixed to one face of the second layer (120), and the tack layer (124) on the activatable adhesive layer (122, 420, 520, 620, 720).

9. The method (800, 900) of claim 8, wherein the activatable adhesive layer (122, 420, 520, 620, 720) comprises a heat activated adhesive layer.

10. The method (800, 900) of claim 9, wherein the tack layer (124) comprises an adhesive applied in a pattern that covers only a portion of the adhesive layer (122, 420, 520, 620, 720) while permitting other portions of the adhesive layer (122, 420, 520, 620, 720) to contact the base layer (110).

11. The method (800, 900) of claim 10, wherein the pattern of the adhesive forming the tack layer (124) comprises a plurality of equidistant dots (425) or the pattern of adhesive forming the tack layer (124) comprises an arrangement of stripes (525, 625, 725) or the pattern of adhesive forming the tack layer (124) comprises a checkerboard pattern.

12. The method (800, 800) of claim 10, wherein the step of activating the adhesive layer to permanently bond the base layer to the second layer (840, 980) comprises using a heat press to apply both heat and pressure to the base layer (110) and the second layer (120) in their stacked configuration.

13. A stacked item comprising: a base layer (110), the base layer (110) comprising a pliable sheet type material; a second layer (120) affixed to the base layer (110); an activated adhesive layer (122, 420, 520, 620, 720) affixing the second layer (120) to the base layer (110); a tack layer (124) that temporarily bonded the second layer (120) to the base layer (110) prior to the activation of the adhesive layer (122, 420, 520, 620, 720), the tack layer (124) comprising an adhesive that covered at least a portion of the adhesive layer (122, 420, 520, 620, 720) prior to activation of the adhesive layer (122, 420, 520, 620, 720).

14. The stacked item of claim 13, wherein the second layer (120) further comprises a second pliable sheet type material and preferably wherein the activated adhesive layer (122, 420, 520, 620, 720) comprises an activated heat activatable material and preferably wherein the stacked item further comprises a second tack layer (124), each of the tack layers (124) comprising an adhesive arranged in a pattern that covered only a portion of each surface of the adhesive layer (122, 420, 520, 620, 720) while permitting the other portion of the unactivated adhesive layer (122, 420, 520, 620, 720) to contact the base layer (110) and the second layer (120), respectively, while temporarily affixing the unactivated adhesive layer (122, 420, 520, 620, 720) to the base layer (110) and the second layer (120) for a quality control inspection prior to activation of the adhesive layer (122, 420, 520, 620, 720).

## Patentansprüche

1. Verfahren (800, 900) zur Anordnung von Schichten eines Artikels, wobei das Verfahren umfasst:
Bereitstellen einer Grundschicht (110) eines biegsamen plattenförmigen Materials (820);
Bereitstellen einer zweiten Schicht (120) eines biegsamen plattenförmigen Materials zum Anbringen an die Grundschicht (110);
Bereitstellen einer aktivierbaren Klebschicht (122, 420, 520, 620, 720), wobei die Klebschicht (122, 420, 520, 620, 720) eine Haftschicht 124 auf mindestens einer Oberfläche (810) aufweist;
Stapeln der Klebschicht auf die Grundschicht (110);
Stapeln der zweiten Schicht auf die Klebschicht (122, 420, 520, 620, 720); Verwenden der mindestens einen Haftschicht (124) um eine Verbindung zu bilden, welche die gestapelte Konfiguration der Grundschicht (124), der Klebschicht (122, 420, 520, 620, 720) und der zweiten Schicht (830, 930, 960) vorübergehend festhält;
Inspizieren der gestapelten Grundschicht, Klebschicht und zweiten Schicht, um zu ermitteln, ob sie vordefinierte Qualitätskontrollnormen (940, 970) erfüllen; falls die gestapelte Grundschicht, Klebschicht und zweite Schicht die vordefinierten Qualitätskontrollnormen
nicht erfüllen, Trennen der Verbindung, die vorübergehend durch die Haftschicht gebildet wurde, um die gestapelte Konfiguration (945, 975) festzuhalten, und Justieren der Positionierung mindestens einer der Klebschicht und der zweiten Schicht und danach Wiederholen der Inspektion der gestapelten Grundschicht, Klebschicht und zweiten Schicht (940, 970); und
falls die gestapelte Grundschicht, Klebschicht und zweite Schicht die vordefinierten Qualitätskontrollnormen erfüllen, Aktivieren der Klebschicht, um die Grundschicht permanent mit der zweiten Schicht (840, 980) zu verbinden.

2. Verfahren (800, 900) nach Anspruch 1, wobei der Schritt zur Bereitstellung einer aktivierbaren Klebschicht, wobei die Klebschicht eine Haftschicht auf mindestens einer Oberfläche (810) aufweist, ferner die Bereitstellung einer wärmeaktivierbaren Klebschicht (122, 420, 520, 620, 720) umfasst.

3. Verfahren nach Anspruch 1, wobei der Schritt zur Bereitstellung einer aktivierbaren Klebschicht, wobei die Klebschicht eine Haftschicht auf mindestens einer Oberfläche aufweist, ferner die Bereitstellung einer wärmeaktivierbaren Klebschicht mit einer Haftschicht auf beiden Oberflächen umfasst.

4. Verfahren nach Anspruch 3, wobei mindestens einer der Haftschichten einen Kleber umfasst, der in einem Muster angeordnet ist, das nur einen Abschnitt der Oberfläche bedeckt, während anderen Abschnitten der Oberfläche erlaubt wird, eines des Grundmaterials und des zweiten Materials zu kontaktieren.

5. Verfahren (800, 900) nach Anspruch 3, wobei beide der Haftschichten (124) Kleber umfassen, die als ein Muster angeordnet sind, das nur Abschnitte der Oberfläche bedeckt, während anderen Abschnitten der Oberfläche erlaubt wird, das Grundmaterial 110 bzw. das zweite Material (120) zu kontaktieren.

6. Verfahren (800, 900) nach Anspruch 5, wobei die Haftschichten (124) verschiedene Arten von Kleber umfassen.

7. Verfahren (800, 900) nach Anspruch 5, wobei die Haftschichten (124)die gleiche Art von Kleber umfassen, oder wobei die Haftschichten (124) Kleber umfassen, die im gleichen Muster angeordnet sind.

8. Verfahren (800, 900) nach Anspruch 1, wobei die zweite Schicht (120) des plattenförmigen Materials umfasst: die aktivierbare Klebschicht (122, 420, 520, 620, 720), die an eine Oberfläche der zweiten Schicht (120) angebracht ist, und die Haftschicht (124) auf der aktivierbaren Klebschicht (122, 420, 520, 620, 720).

9. Verfahren (800, 900) nach Anspruch 8, wobei die aktivierbare Klebschicht (122, 420, 520, 620, 720) eine wärmeaktivierbare Klebschicht umfasst.

10. Verfahren (800, 900) nach Anspruch 9, wobei die Haftschicht (124) einen Kleber umfasst, der in einem Muster aufgetragen ist, das nur einen Abschnitt der Klebschicht (122, 420, 520, 620, 720) bedeckt, während anderen Abschnitten der Klebschicht (122, 420, 520, 620, 720) die Grundschicht (110) zu kontaktieren.

11. Verfahren (800, 900) nach Anspruch 10, wobei das Muster des Klebers, der die Haftschicht (124) bildet, eine Vielzahl von äquidistanten Punkten (425) umfasst, oder das Muster des Klebers, der die Haftschicht (124) bildet, eine Anordnung von Streifen (525, 625, 725) umfasst, oder das Muster des Klebers, der die Haftschicht (124) bildet, ein Schachbrettmuster umfasst.

12. Verfahren (800, 800) nach Anspruch 10, wobei der Schritt der Aktivierung der Klebschicht, um die Grundschicht permanent mit der zweiten Schicht (840, 980) zu verbinden, die Verwendung einer Hitzepresse umfasst, um sowohl Hitze als auch Druck auf die Grundschicht (110) und die zweite Schicht (120) in ihrer gestapelten Konfiguration aufzubringen.

13. Gestapelter Artikel, umfassend: eine Grundschicht (110), wobei die Grundschicht (110) ein biegsames plattenförmiges Material umfasst; eine zweite Schicht (120), die an die Grundschicht (110) angebracht ist; eine aktivierte Klebschicht (122, 420, 520, 620, 720), welche die zweite Schicht (120) an die Grundschicht (110) anbringt; eine Haftschicht (124), welche die zweite Schicht (120) , vor der Aktivierung der Klebschicht (122, 420, 520, 620, 720) vorübergehend mit der Grundschicht (110) verbindet; die Haftschicht (124), die einen Kleber umfasst, der mindestens einen Abschnitt der Klebschicht (122, 420, 520, 620, 720) vor Aktivierung der Klebschicht (122, 420, 520, 620, 720) bedeckte.

14. Gestapelter Artikel nach Anspruch 13, wobei die zweite Schicht (120) ferner ein zweites biegsames plattenförmigen Material umfasst und vorzugsweise wobei die aktivierte Klebschicht (122, 420, 520, 620, 720) ein aktiviertes wärmeaktivierbares Material umfasst und vorzugsweise wobei der gestapelte Artikel ferner eine zweite Haftschicht (124) umfasst, wobei jede der Haftschichten (124) einen Kleber umfasst, der in einem Muster angeordnet ist, das nur einen Abschnitt jeder Oberfläche der Klebschicht (122, 420, 520, 620, 720) bedeckte, während dem anderen Abschnitt der nicht aktivierten Klebschicht (122, 420, 520, 620, 720) erlaubt wird, die Grundschicht (110) bzw. die zweite Schicht (120) zu kontaktieren, während die nicht aktivierte Klebschicht (122, 420, 520, 620, 720) für eine Qualitätskontrollinspektion vor Aktivierung der Klebschicht (122, 420, 520, 620, 720) vorübergehend an die Grundschicht (110) und die zweite Schicht (129) angebracht wird.

## Revendications

1. Procédé (800, 900) d'assemblage de couches d'un article, le procédé consistant à :
fournir une couche de base (110) d'un matériau de type feuille pliable (820) ;
fournir une seconde couche (120) d'un matériau de type feuille pliable, destinée à être fixée à la couche de base (110) ;
fournir une couche adhésive activable (122, 420, 520, 620, 720), la couche adhésive (122, 420, 520, 620, 720) ayant une couche collante (124) sur au moins une face (810) ;
coller la couche adhésive sur la couche de base (110) ;
coller la seconde couche sur la couche adhésive (122, 420, 520, 620, 720) ;
utiliser l'au moins une couche collante (124) pour former une liaison retenant temporairement la configuration collée de la couche de base (124), de la couche adhésive (122, 420, 520, 620, 720) et de la seconde couche (830, 930, 960) ;
inspecter la couche de base collée, la couche adhésive et la seconde couche afin de déterminer si elles respectent les normes de contrôle qualité prédéfinies (940, 970) ; si la couche de base collée, la couche adhésive et la seconde couche ne respectent pas les normes de contrôle qualité prédéfinies, séparer la liaison formée par la couche collante retenant temporairement la configuration collée (945, 975) et ajuster le positionnement de la couche adhésive et/ou de la seconde couche, puis répéter l'inspection de la couche de base collée, de la couche adhésive et de la seconde couche (940, 970) ; et
si la couche de base collée, la couche adhésive et la seconde couche respectent les normes de contrôle qualité prédéfinies, activer la couche adhésive pour lier de façon permanente la couche de base à la seconde couche (840, 980).

2. Procédé (800, 900) selon la revendication 1, dans lequel l'étape consistant à fournir une couche adhésive activable, la couche adhésive ayant une couche collante sur au moins une face (810), consiste en outre à fournir une couche adhésive thermoactivable (122, 420, 520, 620, 720).

3. Procédé selon la revendication 1, dans lequel l'étape consistant à fournir une couche adhésive activable, la couche adhésive ayant une couche collante sur au moins une face, consiste en outre à fournir une couche adhésive thermoactivable ayant une couche collante sur les deux faces.

4. Procédé selon la revendication 3, dans lequel au moins une des couches collantes comprend un adhésif qui est disposé selon un motif et qui couvre uniquement une partie de la face tout en laissant d'autres parties de la face en contact avec le matériau de base ou le second matériau.

5. Procédé (800, 900) selon la revendication 3, dans lequel les deux couches collantes (124) comprennent des adhésifs qui sont disposés selon un motif et qui couvrent uniquement des parties de la face tout en laissant d'autres parties de la face en contact avec le matériau de base (110) et le second matériau (120) respectivement.

6. Procédé (800, 900) selon la revendication 5, dans lequel les couches collantes (124) comprennent différents types d'adhésif.

7. Procédé (800, 900) selon la revendication 5, dans lequel les couches collantes (124) comprennent le même type d'adhésif, ou dans lequel les couches collantes (124) comprennent des adhésifs disposés selon le même motif.

8. Procédé (800, 900) selon la revendication 1, dans lequel la seconde couche (120) de matériau de type feuille comprend : la couche adhésive activable (122, 420, 520, 620, 720) fixée à une face de la seconde couche (120), et la couche collante (124) sur la couche adhésive activable (122, 420, 520, 620, 720).

9. Procédé (800, 900) selon la revendication 8, dans lequel la couche adhésive activable (122, 420, 520, 620, 720) comprend une couche adhésive thermoactivée.

10. Procédé (800, 900) selon la revendication 9, dans lequel la couche collante (124) comprend un adhésif qui est appliqué selon un motif et qui couvre uniquement une partie de la couche adhésive (122, 420, 520, 620, 720) tout en laissant d'autres parties de la couche adhésive (122, 420, 520, 620, 720) en contact avec la couche de base (110).

11. Procédé (800, 900) selon la revendication 10, dans lequel le motif de l'adhésif formant la couche collante (124) comprend une pluralité de points équidistants (425), ou dans lequel le motif de l'adhésif formant la couche collante (124) comprend un agencement de bandes (525, 625, 725), ou dans lequel le motif de l'adhésif formant la couche collante (124) comprend un motif en damier.

12. Procédé (800, 900) selon la revendication 10, dans lequel l'étape d'activation de la couche adhésive afin de lier de façon permanente la couche de base à la seconde couche (840, 980) consiste à utiliser une presse à chaleur pour appliquer de la chaleur et une pression sur la couche de base (110) et la seconde couche (120) dans leur configuration collée.

13. Article collé comprenant : une couche de base (110), la couche de base (110) comprenant un matériau de type feuille pliable ; une seconde couche (120) fixée à la couche de base (110) ; une couche adhésive activée (122, 420, 520, 620, 720) fixant la seconde couche (120) à la couche de base (110) ; une couche collante (124) qui liait temporairement la seconde couche (120) à la couche de base (110) avant l'activation de la couche adhésive (122, 420, 520, 620, 720), la couche collante (124) comprenant un adhésif qui couvrait au moins une partie de la couche adhésive (122, 420, 520, 620, 720) avant l'activation de la couche adhésive (122, 420, 520, 620, 720).

14. Article collé selon la revendication 13, dans lequel la seconde couche (120) comprend en outre un second matériau de type feuille pliable, et de préférence dans lequel la couche adhésive activée (122, 420, 520, 620, 720) comprend un matériau thermoactivable activé, l'article collé comprenant en outre, de préférence, une seconde couche collante (124), chacune des couches collantes (124) comprenant un adhésif qui est disposé selon un motif et qui couvrait uniquement une partie de chaque surface de la couche adhésive (122, 420, 520, 620, 720) tout en laissant l'autre partie de la couche adhésive non activée (122, 420, 520, 620, 720) en contact avec respectivement la couche de base (110) et la seconde couche (120), tout en fixant temporairement la couche adhésive non activée (122, 420, 520, 620, 720) à la couche de base (110) et à la seconde couche (120) en vue d'une inspection de contrôle qualité avant l'activation de la couche adhésive (122, 420, 520, 620, 720).
